(19) Europäisches Patentamt
European Patent Office
Office européen des brevets

(11) Numéro de publication: **0 364 339 A1**

# (12) DEMANDE DE BREVET EUROPEEN

(21) Numéro de dépôt: **89402740.8**

(22) Date de dépôt: **04.10.89**

(51) Int. Cl.5: **C08G 77/62 , C04B 35/00 , C04B 35/58**

(30) Priorité: **14.10.88 FR 8813530**

(43) Date de publication de la demande: **18.04.90 Bulletin 90/16**

(84) Etats contractants désignés: **AT BE CH DE ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Lebrun, Jean-Jacques, Centre Hospitalier de Lyon S**
**Chemin du Grand Revoyet**
**F-69310 Pierre Benite(FR)**
Inventeur: **Bobichon, Charles**
**1, rue de l'Angile**
**F-69005 Lyon(FR)**

(74) Mandataire: **Seugnet, Jean Louis et al**
**RHONE-POULENC CHIMIE SERVICE BREVETS CHIMIE 25 Quai Paul Doumer**
**F-92408 Courbevoie Cédex(FR)**

## (54) Procédé pour contrôler la polymérisation catalytique de compositions polysilazanes.

(57) L'invention a trait à un procédé pour contrôler la polymérisation d'une composition polysilazane contenant une quantité catalytiquement efficace d'un catalyseur de polymérisation dudit polysilazane, et caractérisé par le fait que, au cours de, ou, après ladite polymérisation, l'on met en contact ladite composition avec au moins une substance échangeuse d'ions, notamment une résine échangeuse d'ions.

EP 0 364 339 A1

# PROCEDE POUR CONTROLER LA POLYMERISATION CATALYTIQUE DE COMPOSITIONS POLYSILAZANES

La présente invention a trait à la préparation de polysilazanes, choisis parmi les organopolysilazanes et/ou les organopoly(disilyl)silazanes, à propriétés physico-chimiques contrôlées, utilisables notamment pour la fabrication de produits et articles céramiques à base de nitrure et/ou carbure de silicium, par exemple sous forme de fibres.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3 N_4$, SiC ou leurs mélanges. Ils peuvent être également filés en fibres continues dont la pyrolyse aboutit à des fibres céramiques.

Ils peuvent être également mis sous forme de pellicules plus ou moins minces, de pièces massives moulées, et être utilisés comme liant pour fibres céramiques ou fibres de carbone et comme liant de frittage pour pièces céramiques poreuses. Les possibilités de mise en forme des polysilazanes constituent un de leurs avantages principaux.

Pour constituer de bons précurseurs céramiques, il faut que les polysilazanes, après pyrolyse, conduisent au matériau céramique avec un rendement pondéral élevé. Il est donc nécessaire pour cela que le polysilazane présente lors de la pyrolyse une bonne tenue thermique qui peut être apportée notamment par un haut poids moléculaire et/ou une viscosité élevée, allant jusqu'à l'état solide à température ambiante.

Or, les monomères, ou oligomères, obtenus par les procédés classiques d'ammonolyse d'un ou plusieurs organochlorosilanes, ne sont pas de bons précurseurs, à cause notamment de leur faibles températures d'ébullition. Ainsi, la pyrolyse entraine leur distillation, à moins qu'elle ne soit effectuée sous haute pression, et les rendements en céramique sont alors particulièrement bas. On comprend donc que rapidement le besoin se soit fait sentir d'élaborer des chaines macromoléculaires de masses molaires suffisantes pour obvier à ce problème.

Dans ce but, on a déjà proposé la polymérisation de silazanes au moyen d'agents catalytiques permettant d'aboutir à des produits dont les rendements en céramique après pyrolyse sont nettement améliorés.

Cette polymérisation permet également d'obtenir des polysilazanes solides à température ambiante, fusibles à plus hautes températures, et donc potentiellement filables.

Toutefois, ces réactions de polymérisation, si elles permettent d'augmenter efficacement la masse molaire des polysilazanes, présentent plusieurs inconvénients liés principalement au fait que, jusqu'à ce jour, il n'a pas été possible de les contrôler et de les stopper lorsque le polysilazane en cours de polymérisation possède les propriétés physico-chimiques adéquates à sa transformation ultérieure.

Ainsi, en maitrisant le degré de polymérisation du polysilazane, il serait possible de maitriser sa température de fusion, et, en conséquence, sa température de mise en forme, laquelle doit par ailleurs se situer impérativement en dessous de la température de début de dégradation dudit polymère.

D'autre part, des quantités résiduelles non négligeables de catalyseur peuvent encore être présentes dans le polysilazane formé puis récupéré, de sorte que, même après l'étape de polymérisation à proprement parlé, le polysilazane peut continuer d'évoluer à température ambiante et/ou lors d'un traitement et/ou d'une mise en forme ultérieurs. Ceci se traduit principalement par une augmentation incontrolable du point du fusion du polymère, ce qui peut être très gênant au niveau d'une production industrielle (gestion des stocks de polymères, réglage des matériels destinés à leur transformation).

L'un des buts poursuivis par la présente invention est donc de proposer un procédé de désactivation des réactions de polymérisation catalytiques des polysilazanes, permettant de maitriser les propriétés physico-chimiques desdits polysilazanes (telles que viscosité, température de fusion, etc) dans le but notamment de faciliter et de contrôler leurs transformations ultérieures.

Ce but, parmi d'autres, est atteint par le procédé selon l'invention pour contrôler la polymérisation d'une composition polysilazane contenant une quantité catalytiquement efficace d'un catalyseur de polymérisation dudit polysilazane, et qui est caractérisé par le fait que, au cours de, ou, après ladite polymérisation, l'on met en contact ladite composition avec au moins une substance échangeuse d'ions.

Par ce procédé, de portée générale, il est désormais possible, de manière simple, économique et reproductible, de contrôler à volonté la polymérisation des polysilazanes dans le but d'obtenir des polymères présentant des propriétés physico-chimiques rigoureusement adaptées à chacune de leur

utilisation particulière, notamment pour la fabrication d'articles céramiques formés, tels que de fibres.

Mais d'autres caractéristiques, aspects et avantages de l'invention apparaitront encore plus clairement à la lecture de la description qui va suivre et des exemples concrets, mais non limitatifs, relatifs à sa mise en oeuvre.

Les organopolysilazanes susceptibles d'être polymérisés selon un procédé conforme à l'invention sont des produits bien connus en soi et aisés à préparer ; on peut utiliser notamment n'importe quel produit de réaction entre : (a) au moins un organohalogénosilane de formule (I):

$R_aX_{4-a}Si$ (I)

dans laquelle X représente un halogène, généralement le chlore, et les radicaux R, identiques ou différents, sont choisis parmi l'hydrogène, un radical alkyle linéaire ou ramifié éventuellement halogéné, un radical cycloalkyle, un radical aryle tel que le radical phényl et naphtyle, un radical arylalkyle ou alkylaryle, un radical alcényle tel que le radical vinyle ou allyle, un radical alcynyle tel le radical éthynyle ou propynyle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohexyle et cycloheptyle ; R arylalkyle : les radicaux benzyle, phénylethyle ; R alkylaryle : les radicaux tolyle et xylyle.

A titre d'exemple, comme organohalogénosilane utilisable seul ou en mélange, on peut citer :

$CH_3HSiCl_2$, $H_2SiCl_2$, $(CH_3)_2HSiCl$, $HSiCl_3$

$(CH_3)_2SiCl_2$, $(CH_3)_3SiCl$, $CH_3SiCl_3$, $SiCl_4$

$(CH_3)_2Si(CH_2Cl)_2$, $(CH_3)_3SiCH_2Cl$, $CH_3Si(CH_2Cl)_3$

$(C_6H_5)_2SiCl_2$, $(C_6H_5)(CH_3)SiCl_2$, $C_6H_5SiCl_3$

$(CH_3)(CH_3CH_2)SiCl_2$, $(CH_3)(CH_2=CH)SiCl_2$

$(CH_3)_2(CH_2=CH)SiCl$, $(C_6H_5)_2(CH_2=CH)SiCl$

$(C_6H_5)(CH_2=CH)SiCl_2$, $CH_3(C_6H_5)(CH_2=CH)SiCl$.

Comme exemple de composés comportant au moins un groupement $NH_2$ ou NH et utilisable pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les polysilazanes obtenus en fin de réaction englobent plus spécifiquement :

1 - les polymères linéaires répondant aux formules :

$H_2N(R_2SiNH)_pSiR_2NH_2$ (II)

et

$R_3SiNH(R_2SiNH)_{p'}SiR_3$ (III)

dans lesquelles R a la signification donnée pour la formule (I) ; p et p′ sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$(R_2SiNH)_n$ (IV)

dans laquelle n est compris entre 3 et 10, généralement n = 3,4 et R a la signification donnée pour la formule (I) ci-dessus. Ils sont décrits notamment dans le brevet britannique GB-A.881.178.

3 - les polymères résineux formés de motifs choisis parmi ceux de formule $R_3SiNH_{0,5}$, $R_2SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Les organopoly(disilyl)silazanes susceptibles d'être polymérisés selon le procédé de l'invention sont également des produits bien connus en soi et aisés à préparer. Ils peuvent être notamment préparés par

action : (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc..., sur (b) au moins un organohalogénodisilane de formule:

$R_bX_{3-b}Si\ Si\ R_cX_{3-c}$ (V)

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2$ ClSiSi $(CH_3)_2$ Cl, $(CH_3)_2$Cl SiSi $CH_3$ $Cl_2$

$CH_3$ $Cl_2$ SiSi $CH_3$ $Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

Enfin, comme décrit dans le brevet EP-A 75826, il est possible de préparer des organopoly (disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent dont les ammonolysats.

C'est donc sur ces aminolysats, tels que décrits notamment ci-dessus, que l'on procède à un traitement catalytique de manière à provoquer, suivant la nature de l'aminolysat de départ, une polymérisation et/ou une copolymérisation et/ou un réarrangement des molécules, dans le but d'améliorer leurs propriétés lors de la pyrolyse.

Le terme de polymérisation utilisé dans la présente description doit donc s'entendre comme définissant de manière générale l'ensemble des transformations évoqués ci-avant qui s'opèrent au niveau des aminolysats lors d'un traitement catalytique.

De nombreux catalyseurs peuvent être utilisés à cet effet.

Une classe importante de catalyseurs est constituée par les catalyseurs acides, bien que d'autres ne soient pas a priori exclus mais sont simplement moins répandus.

A titre d'exemple, on peut ainsi utiliser des terres acides, selon un procédé tel que décrit dans la demande de brevet japonaise Kokai n° 77/160446. On peut également utiliser des acides dits de Lewis, tels que les sels métalliques d'acides monocarboxyliques, et plus particulièrement des naphtenates ou des octoates de fer, de zinc, de manganèse, de plomb, de calcium, de zirconium, d'étain, de cobalt ou de cérium, dont les conditions complètes de mise en oeuvre sont rapportées par exemple dans le brevet US 3.007.886, ou bien encore tels que les sels métalliques d'acides inorganiques, et plus particulièrement des sulfates, nitrates ou chlorures de cuivre, d'argent, d'or, de zinc, de cadmium, de mercure, de fer, de cobalt ou de nickel, selon des conditions de mise en oeuvre décrites notamment dans le brevet US 3.187.030.

L'invention s'applique également particulièrement bien aux aminolysats polymérisés au moyen d'un acide fort choisi parmi l'acide perchlorique $HClO_4$ et l'acide trifluorométhane sulfonique, et selon des modalités de mise en oeuvre telles que décrites dans la demande de brevet français n° 2.577.933 au nom de la Demanderesse.

Suivant la nature des aminolysats de départ et du catalyseur utilisé, il est possible de procéder à une polymérisation en masse ou à une polymérisation en solution dans un solvant organique.

Comme cela a déjà été indiqué plus haut dans la description, le problème posé jusqu'à ce jour réside dans le fait que toutes ces réactions de polymérisation ne peuvent pas être facilement désactivées et donc contrôlées.

Ainsi, dans le cas plus particulier où l'on utilise l'acide trifluorométhanesulfonique comme catalyseur, on observe de façon surprenante et inattendue que la réaction de polymérisation se poursuit même en présence du fort dégagement d'ammoniac inhérent à ce type de polymérisation, alors même qu'il est bien admis que l'ajout d'une base dans le milieu réactionnel doit permettre d'arrêter une polymérisation de type cationique (catalyseur acide).

Donc, dans le but de maitriser ces réactions de polymérisation, et conformément à l'invention, on met alors en contact le milieu de réaction avec une substance échangeuse d'ions.

Cette mise en contact ne se fait bien sûr que lorsque le degré d'avancement de la polymérisation est tel qu'il corresponde à l'obtention d'un polymère silazane présentant les propriétés physico-chimiques désirées pour sa mise en oeuvre ultérieure.

La mise en contact peut se faire selon tout moyen connu en soi.

Selon une première variante de mise en oeuvre du procédé selon l'invention, cette mise en contact se fait en introduisant directement dans le milieu de réaction la substance échangeuse d'ions sous une forme finement divisée (poudre) ; le polymère constituant la production est alors séparé du mélange par toute technique appropriée, notamment par filtration.

Selon une autre variante, on fait passer le milieu de réaction à travers des membranes ou des tamis à base de et/ou imprégnés de substances échangeuses d'ions ; cette technique permet alors de s'affranchir d'une étape de séparation ultérieure.

Les paramètres de mise en contact dans cette étape comprennent la quantité et la qualité de la substance échangeuse d'ions, le temps de contact et la température, ces paramètres étant liés.

Bien entendu, la nature de ladite substance échangeuse d'ions, c'est à dire son caractère anionique et/ou cationique, est choisie en fonction de la nature du catalyseur permettant de mettre en oeuvre la polymérisation des aminolysats.

Ainsi, plus précisement, si l'on utilise un catalyseur de type acide tel que défini précédemment, la substance échangeuse d'ions utilisée est alors de type anionique.

Une classe particulièrement importante et préférée de substances échangeuses d'ions utilisables dans le présent procédé est constitué par les résines échangeuses d'ions.

Les résines échangeuses d'ions sont des produits essentiellement synthétiques, bien connus de l'homme de l'art. A ce sujet, on pourra par exemple se reporter à l'article extrait des "Techniques de l'Ingénieur", référencé J 2860 a, et intitulé : "Opération Chimiques Unitaires. Echange d'ions".

Dans le cadre d'une polymérisation réalisée au moyen d'un agent catalytique de type acide, les résines échangeuses d'anions principalement utilisées dans le présent procédé sont les résines polystyréniques et les résines polyacryliques.

Dans ce cadre toujours, on utilise de préférence des résines du type polystyrénique.

Les résines anioniques de type polystyrénique convenant le mieux pour la mise en oeuvre du procédé selon l'invention correspondent à la formule suivante :

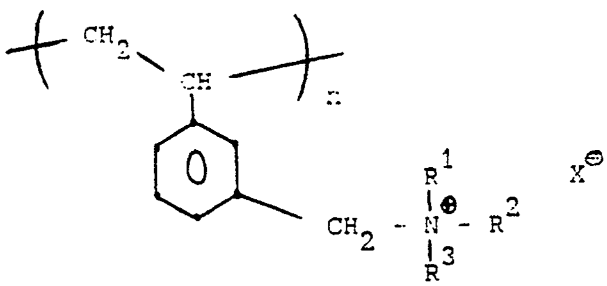

dans laquelle X représente un atome halogène et les radicaux $R^1$, $R^2$ et $R^3$, identiques ou différents, sont choisis parmi l'hydrogène, et les radicaux hydrocarbonés, éventuellement substitués. Parmi les radicaux hydrocarbonés les plus usités, on peut citer les radicaux alkyles linéaires ou ramifiés éventuellement halogénés, les radicaux cycloalkyles, les radicaux aryles tels que le radical phényl et naphtyle, les radicaux arylalkyles ou alkylaryles, et les radicaux alcényles tels que le radical vynile ou allyle, les radicaux alcynyles tel le radical éthynyle ou propynyle.

Comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohe xyle et cycloheptyle ; R arylalkyle : les radicaux benzyle, phénylethyle ; R alkylaryle : les radicaux tolyle et xylyle.

Les raddicaux $R^1$, $R^2$ et $R^3$ de type alkyle conviennent particulièrement bien.

La résine est de préférence utilisée sous la forme d'une poudre introduite directement dans le milieu de réaction.

De faibles quantités de résine suffisent ; celles-ci sont généralement comprises entre 0,1 et 10 %, de préférence entre 0,1 et 4 % en poids par rapport à la masse total du milieu réactionnel.

Le temps de contact peut varier entre quelques minutes et une à deux heures.

A l'issue de cette étape, on sépare alors le polysilazane polymérisé, éventuellement en solution dans un solvant, et la résine, et ceci par tout moyen connu en soi, notamment par filtration.

Le polysilazane ainsi récupéré, après éventuellement élimination du solvant puis séchage, constitue alors la production.

Ces polysilazanes trouvent une application toute particulière dans la fabrication de produits et articles céramiques contenant, au moins en partie, du nitrure de silicium et/ou du carbure de silicium.

Dans le cas le plus général (obtention de poudres), on chauffe alors le polysilazane dans une atmosphère inerte ou sous vide à une température comprise entre 600 et 1500 ° C, jusqu'à ce que le polysilazane soit converti entièrement en $Si_3N_4$ et/ou SiC.

Compte tenu de leurs propriétés physico-chimiques rigoureusement contrôlées, les polysilazanes obtenus par le procédé selon l'invention sont particulièrement bien adaptés à la fabrication de produits céramiques formés, tels que des fibres. Le polysilazane est alors filé sous forme de fibres au moyen d'une filière puis est traité thermiquement (pyrolyse) pour donner une fibre à base de $Si_3N_4$ et/ou SiC. Ces fibres peuvent alors servir de structure de renforcement pour les matériaux composites du type notamment céramique/céramique, céramique/plastique ou céramique/métal.

Des exemples illustrant l'invention vont maintenant être donnés.

EXEMPLE 1 à 3

Ces exemples ont pour but d'illustrer la stabilité thermique des polysilazanes polymérisés selon un procédé conforme à l'invention.

A/ Préparation des co-ammonolysats de départ

Dans un réacteur de trois litres double enveloppe muni d'une agitation mécanique, d'un tube d'entrée des gaz et d'un condenseur, on effectue une coammonolyse, en présence de 1,1 l d'éther isopropylique, d'un mélange de $(CH_3)_2$ $SiCl_2$ (forme D) et $CH_3SiCl_3$ (forme T) en proportions variables. Le mélange D/T dans l'éther isopropylique est refroidi à 3 ° C et est maintenu à cette température pendant l'introduction de $NH_3$ gazeux. Le débit d'introduction de $NH_3$ est maintenu à environ 6 ml/s de gaz et l'addition a lieu en 6 heures. Il se forme au cours de la réaction des quantités importantes de chlorhydrate d'ammonium qui épaississent la solution.

En fin d'essai, on filtre le $NH_4Cl$ formé sur verre fritté (diamètre moyen des pores : 10 µm). Le précipité est lavé plusieurs fois à l'aide de solvant sec. La solution récupérée est limpide. Les solvants sont évaporés sous vide (25 mbars à 70 ° C), et les dernières traces de solvant sont éliminées à 70 ° C sous 2 mbars. Les coammonolysats obtenus sont des liquides visqueux à température ambiante.

Les quantités de chlorosilanes D et T introduites en début de réaction sont les suivantes :

. 53,6 g de $(CH_3)_2$ $SiCl_2$ (0,36 moles) et 138,7 g de $CH_3$ $SiCl_3$ (1,06 mole) soit un rapport de T/D de 75/25

. 78,7 g de $(CH_3)_2$ $SiCl_2$ (0,67 moles) et 119,1 g de $CH_3$ $SiCl_3$ (0,91 mole) soit un rapport de T/D de 60/40

. 72,1 g de $(CH_3)_2$ $SiCl_2$ (0,61 mole) et 134,0 g de $CH_3$ $SiCl_3$ (1,3 mole) soit un rapport molaire T/D de 55/45.

B/ Polymérisation des coammonolysats

Les coammonolysats obtenus en A sont dilués à 50 % en poids dans l'éther isopropylique. Le catalyseur de polymérisation est de l'acide trifluorométhanesulfonique. La température est de 70 ° C. Après polymérisation, on ajoute 3,0 % de résine "Microionex" de la Société Rohm et Haas (résine anionique de type polystyrénique) pendant 0h30 à température ambiante. Le mélange réactionnel est ensuite filtré sur fritté n ° 4. Le solvant est éliminé sous 2 mm de Hg à 170 ° C pendant 3h00. Les points de fusion Pf des polymères obtenus sont les suivants :

| EXEMPLES | COAMMONOLYSAT T/D | Pf ° C |
|---|---|---|
| 1 | 55/45 | < 30 |
| 2 | 60/40 | 85 |
| 3 | 75/25 | 145 |

Les produits obtenus sont stables thermiquement lorsqu'ils sont chauffés à 170 ° C pendant 4h00.

EXEMPLES COMPARATIFS 4 à 6 :

ces exemples comparatifs ont été réalisés en reprenant le même mode opératoire que pour les essais correspondants 1 à 3 donnés ci-dessus mais sans mise en contact du mélange réactionnel avec la résine anionique. Les points de fusion Pf des polymères obtenus sont les suivants :

| EXEMPLES | COAMMONOLYSAT T/D | Pf°C |
|---|---|---|
| 4 | 55/45 | 130 |
| 5 | 60/40 | 180 |
| 6 | 75/25 | >240 |

Le produit 4 chauffé à 170°C voit son point de fusion évoluer de 30°C en 4h00 et le produit 5 chauffé à 170°C voit son point de fusion évoluer de 40°C en 4h00.

Ces résultats démontrent qu'il est désormais possible d'obtenir des polymères silazanes dont la température de ramolissement, et donc a fortiori la température de mise en forme, telle que de filage (lorsque l'on désire obtenir des fibres), est largement en dessous de la température critique de début de dégradation laquelle pour ce type de produit se situe généralement aux environs de 200°C. D'une part ceci permet de réaliser des mises en forme à plus basses températures, donc de réaliser des économies en énergie et en matériels, et d'autre part il s'en suit une souplesse et une sécurité accrues au cours desdites étapes de mise en forme.

## Revendications

1. Procédé pour contrôler la polymérisation d'une composition polysilazane contenant une quantité catalytiquement efficace d'un catalyseur de polymérisation dudit polysilazane, caractérisé par le fait que, au cours de, ou, après ladite polymérisation, l'on met en contact ladite composition avec au moins une substance échangeuse d'ions.

2. Procédé selon la revendication 1 caractérisé en ce que ladite substance est une résine échangeuse d'ions.

3. Procédé selon l'une quelconque des revendications 1 et 2 caractérisé en ce que la polymérisation s'effectue en masse.

4. Procédé selon l'une quelconque des revendications 1 et 2 caractérisé en ce que la polymérisation s'effectue en solution dans un solvant organique.

5. Procédé selon l'une quelconque des revendications précédentes caractérisé en ce que l'on utilise un catalyseur de polymérisation acide.

6. Procédé selon la revendication 5 caractérisé en ce que ledit catalyseur est choisi parmi l'acide perchlorique et l'acide trifluorométhanesulfonique.

7. Procédé selon l'une quelconque des revendications 5 et 6 caractérisé en ce que l'on utilise une résine échangeuse d'anions de type polystyrénique ou de type polyacrylique.

8. Procédé selon la revendication 7 caractérisé en ce que l'on utilise une résine de type polystyrénique.

9. Procédé selon la revendication 8 caractérisé en ce que ladite résine de type polystyrénique répond à la formule suivante :

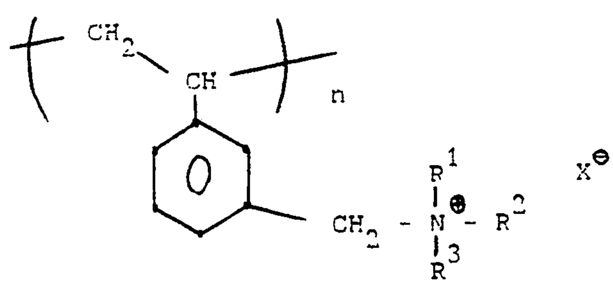

dans laquelle X représente un atome halogène et les radicaux $R^1$, $R^2$ et $R^3$, identiques ou différents, sont choisis parmi l'hydrogène, et les radicaux hydrocarbonés, éventuellement substitués.

10.Procédé selon la revendication 9 caractérisé en ce que les radicaux $R^1$, $R^2$ et $R^3$ sont des radicaux alkyles.

11.Polysilazane susceptible d'être obtenu par la mise en oeuvre d'un procédé tel que défini à l'une quelconque des revendications 1 à 10.

12.Fibre à base de nitrure et/ou de carbure de silicium caractérisée en ce qu'elle est obtenue par filage puis pyrolyse dans une atmosphère inerte ou sous vide à une température comprise entre 600 et 1500 °C d'un polysilazane tel que défini dans la revendication 11.

Office européen des brevets

# RAPPORT DE RECHERCHE EUROPEENNE

Numero de la demande

EP 89 40 2740

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 590 580 (RHONE-POULENC)<br>* Revendications 1,2; page 8, lignes 15-27 * | 1-6 | C 08 G 77/62<br>C 04 B 35/00<br>C 04 B 35/58 |
| X | EP-A-0 202 176 (RHONE-POULENC)<br>* Revendications 1,8,9; page 8, dernier paragraphe; page 10, paragraphes 2,3; page 11; en entier * | 1 | |
| A | EP-A-0 186 736 (LICENTIA)<br>* Revendication 1 * | 1 | |

DOMAINES TECHNIQUES RECHERCHES (Int. Cl.5)

C 08 G
C 08 L
C 04 B
C 08 J

Le présent rapport a été établi pour toutes les revendications

| Lieu de la recherche | Date d'achèvement de la recherche | Examinateur |
|---|---|---|
| LA HAYE | 19-12-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)